(19) Europäisches Patentamt
European Patent Office
Office européen des brevets

(11) Numéro de publication: **0 097 539 B1**

(12) **FASCICULE DE BREVET EUROPEEN**

(45) Date de publication du fascicule du brevet: **06.08.86**

(51) Int. Cl.⁴: **C 01 F 7/02**, B 01 J 2/08, B 01 J 35/08, B 01 J 21/04

(21) Numéro de dépôt: **83400919.3**

(22) Date de dépôt: **06.05.83**

(54) **Procédé de fabrication de billes d'alumine mises en forme par coagulation en gouttes.**

(30) Priorité: **19.05.82 FR 8208774**

(43) Date de publication de la demande: **04.01.84 Bulletin 84/1**

(45) Mention de la délivrance du brevet: **06.08.86 Bulletin 86/32**

(84) Etats contractants désignés: **BE DE FR GB IT NL**

(56) Documents cités:
**EP - A - 0 015 801**
**FR - A - 1 492 326**

**Le dossier contient des informations techniques présentées postérieurement au dépôt de la demande et ne figurant pas dans le présent fascicule.**

(73) Titulaire: **RHONE-POULENC SPECIALITES CHIMIQUES, "Les Miroirs" 18, Avenue d'Alsace, F-92400 Courbevoie (FR)**

(72) Inventeur: **Jacques, Roland, 579, Montée de Silhol, F-30100 Ales (FR)**
Inventeur: **Dupin, Thierry, 7, rue Robert de Luzarches, F-95140 Garges-lès-Gonesse (FR)**

(74) Mandataire: **Savina, Jacques et al, RHONE-POULENC INTERSERVICES Service Brevets Chimie 25, quai Paul Doumer, F-92408 Courbevoie Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 097 539 B1

ACTORUM AG

## Description

La présente invention concerne un procédé de fabrication de billes d'alumine mises en forme par coagulation en gouttes et leur application comme supports de catalyseurs.

Il est connu d'après la demande de brevet européen n° 15 801 au nom de la Société Rhône-Poulenc Industries de préparer des billes d'alumine à double porosité par la technique dite «égouttage dans l'huile» ou de «coagulation en gouttes».

Le procédé décrit dans cette demande comporte le mélange à un pH inférieur à 7,5 d'un sol de boehmite ultra-fine ou de pseudo-boehmite avec des particules sphéroïdales d'alumine dans une proportion comprise entre 30 et 95% en poids. Le sol de boehmite a une concentration comprise entre 5 et 25%. Les particules sphéroïdales d'alumine sont sous forme d'au moins l'une des phases comprises dans le groupe constitué par êta, gamma, thêta, delta. Elles présentent un volume microporeux compris entre 0,4 et 1 $cm^3/g$, leur surface spécifique est comprise entre 100 et 350 $m^2/g$ et leur diamètre est compris entre 1 et 50 micromètres, la mise en forme sphéroïdale et la gélification des gouttes du mélange, la récupération des billes gélifiées, leur séchage et leur calcination à une température comprise entre 550 et 1100 °C.

La mise en forme sphéroïdale et la gélification des gouttes du mélange mis en œuvre dans le procédé est opérée par égouttage des gouttes du mélange dans une colonne contenant une phase supérieure constituée par du pétrole et une phase aqueuse inférieure constituée par une solution d'ammoniaque. La mise en forme s'effectue dans la phase supérieure et la gélification essentiellement dans la phase inférieure. La température du pétrole est généralement voisine de la température ambiante. La solution d'ammoniaque ayant son pH maintenu à une valeur supérieure à environ 9. Le temps de séjour des gouttes dans l'ammoniaque est de quelques minutes et généralement inférieur à environ 15 minutes. Dans ces conditions, les billes recueillies sont suffisamment solides et ne sont pas déformées lors des manipulations subséquentes.

Ce procédé présente de nombreux avantages. En particulier, il permet de partir de matières premières facilement accessibles et aisées à préparer; il permet d'obtenir des produits légers sans nécessiter la mise en œuvre d'agents porogènes; enfin, il permet d'éviter une étape de vieillissement des billes dans l'ammoniaque après leur gélification.

Il a, par ailleurs été décrit dans la demande de brevet FR-A 1 492 326 un procédé de fabrication de billes d'alumine du type comportant la mise en forme par coagulation en gouttes d'une dispersion aqueuse d'alumine, la récupération des billes formées, le séchage et la calcination. On ajoute à la dispersion une quantité de gas-oil et un émulsifiant LAE 0–2,2 pour obtenir une émulsion de type huile dans l'eau.

La Demanderesse a mis au point un procédé de fabrication de billes d'alumines mises en forme par coagulation en gouttes qui permet d'obtenir des billes présentant une perte à l'attrition très faible et dont l'écoulement dans les procédés catalytiques fonctionnant en lit mobile ou lit bouillonnant ou à recirculation du catalyseur est particulièrement intéressant.

De plus, les billes obtenues selon le procédé de l'invention présentent un volume poreux total augmenté sans nuire à leur solidité. Cette caractéristique rend leur utilisation comme catalyseur ou support de catalyseur particulièrement intéressante car la légéreté des billes diminue leur inertie thermique et permet ainsi d'atteindre plus rapidement les températures d'utilisation.

Par ailleurs, le procédé de l'invention convient spécialement à la fabrication de supports de catalyseurs en alumine très pure notamment utilisés dans les procédés de conversion d'hydrocarbures.

La présente invention concerne un procédé de fabrication de billes d'alumine du type, comportant la mise en forme par coagulation en gouttes d'une suspension ou d'une dispersion aqueuse d'alumine, ou d'une solution d'un sel basique d'aluminium, récupération des billes formées, séchage et calcination, caractérisé en ce que la suspension, la dispersion aqueuse d'alumine ou la solution de sel basique d'aluminium est sous forme d'une émulsion de type huile dans l'eau et en ce que les suspensions ou dispersions d'alumine ou solutions de sels basiques d'aluminium contiennent en outre une charge d'alumine, la proportion de charge pouvant aller jusqu'à 90% en poids exprimé en $Al_2O_3$ par rapport à l'alumine totale.

Sans limiter la présente invention à la théorie, on peut penser que l'augmentation du volume poreux total est obtenue grâce à l'émulsion qui crée une porosité à l'intérieur de la bille après calcination.

Les procédés de fabrication de billes d'alumine du type comportant la mise en forme par coagulation en gouttes d'une suspension ou d'une dispersion aqueuse d'alumine, récupération des billes formées, séchage et calcination sont des procédés bien connus de l'homme de l'Art et ont été largement décrits dans la littérature. On peut, par exemple, les classer en trois catégories distinctes.

La première concerne les procédés fondés sur l'augmentation du pH de la suspension ou de la dispersion aqueuse d'alumine qui provoque la gélification des gouttes. Selon ces procédés des gouttes de la suspension ou de la dispersion aqueuse d'alumine sont généralement introduites dans un liquide non totalement miscible à l'eau, de telle façon que les gouttes forment des particules sphériques, ces particules sont ensuite coagulées simultanément et/ou postérieurement à la mise en forme sphéroïdale par changement de pH à l'aide d'un agent gélifiant.

Le liquide non miscible à l'eau peut être tel que les gouttes chutent (densité du liquide inférieure à la densité apparente des gouttes) ou montent

(densité du liquide supérieure à la densité apparente des gouttes) dans le liquide de traitement; comme exemple de liquides non miscibles à l'eau convenant aux fins du procédé de l'invention, on peut citer notamment le pétrole, le kérosène, le dodécylbenzène, le trichloréthylène, le perchloréthylène, les solvants organiques, les hydrocarbures et les huiles minérales en général.

L'agent gélifiant peut notamment être l'ammoniac, l'ammoniaque, le carbonate d'ammonium, les amines à longue chaine (notamment celles commercialisées sous la marque Primène) l'hexaméthylène tétramine, l'urée.

Le liquide non miscible à l'eau est mis en œuvre à une température comprise généralement entre 60 et 120 °C lorsque l'agent gélifiant utilisé est un précurseur d'ammoniaque tel que l'examéthylène tétramine ou l'urée.

Les gouttes ainsi traitées sont récupérées de leur milieu de mise en forme et/ou de coagulation, séchées puis calcinées.

De tels procédés qui mettent en œuvre soit des suspensions soit des dispersions aqueuses d'alumine ou des solutions de sels basiques d'aluminium ont largement été décrits dans la littérature et, notamment dans les brevets américains n° 2 435 379, 2 620 314, 3 346 336, 3 096 295, 3 27 234, 3 600 129, 3 943 071, 3 979 334, 4 116 882 et les brevets européens n° 1023 et 15 801.

Selon un mode de mise en œuvre préféré de l'invention, la mise en forme par coagulation en gouttes d'une suspension ou d'une dispersion aqueuse d'alumine est opérée par introduction des gouttes dans une colonne contenant une phase supérieure constituée par du pétrole et une phase aqueuse inférieure constituée par une solution d'ammoniaque. La mise en forme s'effectue dans la phase supérieure et la gélification essentiellement dans la phase inférieure. La température du pétrole est généralement voisine de la température ambiante. La solution d'ammoniaque doit avoir son pH maintenu au-dessus d'environ 9. Le temps de séjour des gouttes dans l'ammoniaque est de quelques minutes et généralement inférieur à environ 15 minutes. Dans ces conditions, les billes recueillies sont suffisamment solides et ne sont pas déformées lors des manipulations subséquentes.

La seconde catégorie concerne les procédés fondés sur l'enlèvement d'eau des gouttes de la suspension ou de la dispersion aqueuse d'alumine par sèchage ou par introduction ou mise en suspension des gouttes dans un liquide non miscible, susceptible d'enlever l'eau. Il se produit alors une gélification des gouttes. Le sèchage ou le liquide non miscible extraient l'eau des gouttes et causent la gélification de celles-ci sous forme sphéroïdales, on peut utiliser comme liquide non miscible par exemple le 2-éthyl -1 - hexanol ou un alcool aliphatique à longue chaine commercialisé sous la marque Octylol. Les principales étapes ainsi qu'un dispositif de mise en œuvre du procédé de gélification par mise en contact avec un liquide non miscible sont notamment décrits dans les articles de P.A. Haas, FG. Kitts et H. Bentler dans Chemical Engineering Progress Symposium series 1967, 63, n° 80, p. 16–27 et de I. Amato et D. Martorana dans Rev. Int. Hautes Temp. et Refract. 1972 t : 9 p. 197–204. Lorsque l'on opère par sèchage, les gouttes sont généralement générées dans un courant de gaz chaud à une température comprise entre 100 et 1200 °C.

La troisième catégorie concerne les procédés fondés sur la réticulation d'un polymère qui produit la gélification des gouttes.

Selon ces procédés, on mélange la suspension ou la dispersion aqueuse d'alumine avec au moins un monomère hydrosoluble dont le polymère non réticulé est soluble dans l'eau ou forme un gel, on disperse ensuite le mélange obtenu sous forme de gouttes dans un milieu fluide chaud où se produit une polymérisation substantielle du monomère. Le monomère peut être un composé acrylique de formule générale:

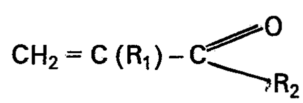

dans laquelle $R_1$ est H ou le radical méthyle, $R_2$ est un radical O $R_3$ ou N $R_3R_4$, où $R_3$ et $R_4$ représentent H ou un radical hydrophyle, notamment un radical hydroxyalkyle contenant en particulier de 1 à 2 atomes de carbone ou un radical méthoxyméthyle. Les principales étapes de ce procédé ont notamment été décrites dans les brevets français n° 2 261 056 et 2 261 057.

Les billes obtenues sont ensuite séparées de leur milieu de gélification puis séchées et calcinées.

La suspension ou la dispersion aqueuse d'alumine mises en œuvre selon l'invention doivent être gélifiables ou coagulables selon les procédés qui ont été rappelés ci-dessus.

Les suspensions ou les dispersions aqueuses d'alumine que l'on peut mettre en œuvre selon l'invention sont notamment les suspension ou dispersions aqueuses de boehmites fines ou ultrafines qui sont composées de particules ayant des dimensions dans le domaine colloïdal c'est-à-dire inférieure à 2000 $10^{-1}$ nm.

Les dispersions ou suspensions aqueuses de boehmites fines ou ultra-fines peuvent être obtenues ainsi qu'il est bien connu de l'homme de l'art par peptisation dans l'eau ou l'eau acidulée de ces produits. Les boehmites fines ou ultra-fines mises en œuvre selon la présente invention peuvent notamment avoir été obtenues selon le procédé décrit dans les brevets français n° 1 261 182 et 1 381 282 ou dans la demande de brevet européen n° 15 196 au nom de la demanderesse.

Le brevet français n° 1 261 182 décrit notamment un procédé de fabrication de boehmite fine ou ultra-fine par chauffage d'une dispersion

aqueuse d'alumine en présence d'un radical d'acide monovalent, la dispersion aqueuse d'alumine ayant été obtenue à partir de chlorure basique d'aluminium, de nitrate basique d'aluminium, d'hydroxyde d'aluminium, de gel d'alumine ou de solutions colloïdales d'alumine. Ce produit commercialisé par la Société Du Pont de Nemours sous la marque Baymal, représente une boehmite fine ou ultra-fine fibrillaire dont la surface spécifique est généralement comprise entre 250 et 350 $m^2/g$.

Le brevet français n° 1 381 282, décrit notamment un procédé de fabrication de boehmite fine ou ultra-fine consistant à faire évoluer à une température comprise entre 60 et 150 °C une suspension ou un gâteau de sel d'alumine hydratée amorphe contenant jusqu'à 35% en poids d'alumine comptée en $Al_2O_3$, et par rapport à cette alumine comptée en molécules d'$Al_2O_3$, une quantité d'ions acides monovalents variant de 0,05 à 0,5, pendant un temps de 15 heures à 10 jours; le gâteau ayant été obtenu par essorage, lavage et filtration de gel d'alumine précipité en continu à un pH compris entre 8 et 9 à partir d'une solution d'aluminate de soude et d'acide nitrique. La surface spécifique de ces produits varie généralement entre 200 et 600 $m^2/g$.

La demande de brevet européen n° 15 196 décrit notamment un procédé de fabrication de boehmite au moins partiellement sous forme de boehmite ultra-fine par traitement dans un milieu aqueux ayant un pH inférieur à 9 d'une poudre d'alumine active obtenue par déshydratation rapide d'hydrargillite dans un courant de gaz chauds.

On peut également mettre en œuvre les suspensions ou dispersions aqueuses obtenues à partir de pseudo-boehmite, de gels d'alumine amorphe, de gels d'hydroxyde d'aluminium ou d'hydrargillite ultrafine.

La pseudo-boehmite peut notamment avoir été préparée selon le procédé décrit dans le brevet américain n° 3 630 670 par réaction d'une solution d'un aluminate alcalin avec une solution d'un acide minéral. Elle peut également avoir été préparée tel que décrit dans le brevet français n° 1 357 830 par précipitation à pH 9, à une température faiblement supérieure à l'ambiante à partir de réactifs de concentrations telles que l'on obtient environ 50 g/l d'alumine dans la dispersion.

Les gels d'alumine amorphe peuvent notamment avoir été préparés selon les procédés décrits dans l'article «Alcoa Paper n° 19 (1972) pages 9 à 12" et notamment par réaction d'aluminate et d'acide, ou d'un sel d'aluminium et d'une base ou d'un aluminate et d'un sel d'aluminium ou par hydrolyse d'alcoolates d'aluminium ou par hydrolyse de sels basiques d'aluminium.

Les gels d'hydroxyde d'aluminium peuvent notamment être ceux qui ont été préparés selon les procédés décrits dans les brevets américains n° 3 268 295 et 3 245 919.

L'hydrargillite ultra-fine peut notamment avoir été préparée selon le procédé décrit dans le brevet français n° 1 371 808, par évolution à une température comprise entre la température ambiante et 60 °C de gels d'alumine sous forme de gâteau et contenant par rapport à l'alumine comptée en molécules d'$Al_2O_3$, 0,10 ions acides monovalents.

On peut également mettre en œuvre les suspensions ou dispersions aqueuses de boehmite ou de pseudo-boehmite ultra-pures préparées selon le procédé décrit ci-après.

Ce procédé est du type selon lequel on effectue la réaction d'une aluminate alcalin avec de l'anhydride carbonique pour former un précipité d'hydroxycarbonate d'aluminium amorphe, on sépare le précipité obtenu par filtration puis on lave celui-ci (le procédé est notamment décrit dans le brevet américain n° 3 268 295). Ensuite,

a) dans une première étape, on mélange le précipité lavé d'hydroxycarbonate d'aluminium amorphe avec une solution d'un acide, d'une base ou d'un sel ou de leurs mélanges; ce mélange est effectué en versant la solution sur l'hydroxycarbonate, le pH du milieu ainsi constitué étant inférieur à 11,

b) dans une deuxième étape, on chauffe le milieu réactionnel ainsi constitué à une température inférieure à 90 °C pendant un temps d'au moins 5 minutes,

c) dans une troisième étape, on chauffe le milieu résultant de la deuxième étape à une température comprise entre 90 °C et 250 °C.

Selon ce procédé, la température de traitement de la deuxième étape est comprise entre 50 et 85 °C, la durée du traitement étant comprise entre 5 minutes et 5 heures.

Selon ce procédé, l'acide mis en œuvre dans la première étape est un acide minéral ou organique fort ou faible soluble dans l'eau et de préférence choisi parmi: l'acide nitrique, l'acide perchlorique, l'acide sulfurique, l'acide chlorhydrique, l'acide iodhydrique, l'acide bromhydrique, les acides formique, acétique, propanoïque, butanoïque, oxalique, maléïque, succinique, glutarique, les acides chloro et bromo-acétiques.

Selon ce procédé la base mise en œuvre dans la première étape est une base faible soluble dans l'eau et de préférence choisie parmi: l'ammoniaque, les amines tels que les méthyléthylpropylamines, les amino-alcools tels que les mono, di ou tri éthanolamines, et l'amino-2 propanol, les hydroxydes d'ammonium quaternaire et les produits susceptibles de se décomposer dans les conditions de réaction en donnant une base comme, par exemple, l'hexaméthylène tétramine ou l'urée.

Selon ce procédé le sel mis en œuvre dans la première étape est choisi parmi les sels dérivés de l'ammoniac et des amines et ceux comportant le cation aluminium et comportant les anions nitrate, chlorure, formiate, citrate, acétate ou oxalate.

Selon ce procédé dans la première étape, la concentration en composé d'aluminium exprimée

en $Al_2O_3$ du mélange est comprise entre 20 et 400 g/l exprimée en $Al_2O_3$ et de préférence comprise entre 40 et 200 g/l.

Selon ce procédé dans le mélange, selon la première étape, le rapport molaire entre la somme des anions et des cations présents (à l'exclusion de $H^+$ et $OH^-$) et l'équivalent exprimé en $Al_2O_3$ du composé d'aluminium est compris entre 0,01 et 2 et de préférence entre 0,03 et 0,9.

Selon ce procédé, la température de chauffage selon la troisième étape est comprise entre 100 et 160 °C, la durée du chauffage étant comprise entre 10 minutes et 30 heures et de préférence entre 30 minutes et 10 heures.

Les dispersions ou suspensions de boehmite et pseudo-boehmite obtenues selon ce procédé présentent une teneur en alcalins inférieure à 0,005% exprimée sous forme du rapport pondéral oxyde du métal alcalin/$Al_2O_3$.

Lorsque l'on désire fabriquer selon le procédé de l'invention des supports de catalyseurs en alumine très pure, on utilise de préférence les suspensions ou dispersions aqueuses de boehmite ou de pseudo-boehmite ultra-pures qui ont été préparées selon le procédé décrit ci-dessus, ou les gels d'hydroxyde d'aluminium peptisés qui ont été préparés à partir de l'hydrolyse d'alcoolates d'aluminium selon un procédé du type de celui décrit dans le brevet américain n° 2 892 858.

On décrit ci-après le procédé de fabrication qui conduit à de tels gels d'hydroxyde d'aluminium de type boehmite obtenue comme sous-produit dans la fabrication de l'alcool par hydrolyse d'un alcoolate ou alcoxyde d'aluminium (synthèse de Ziegler). Les réactions de synthèse d'alcools Ziegler sont décrites notamment dans le brevet américain n° 2 892 858. Selon ce procédé, on prépare tout d'abord le triéthylaluminium à partir d'aluminium, d'hydrogène et d'éthylène, la réaction étant réalisée en deux étapes avec recyclage partiel du triéthylaluminium.

$$Al + 3/2\,H_2 + 2\,Al(C_2H_5)_3 \rightarrow 3\,Al(C_2H_5)_2H$$

$$3\,Al(C_2H_5)_2H + 3\,C_2H_4 \rightarrow 3\,Al(C_2H_5)_2$$

on ajoute de l'éthylène dans l'étape de polymérisation

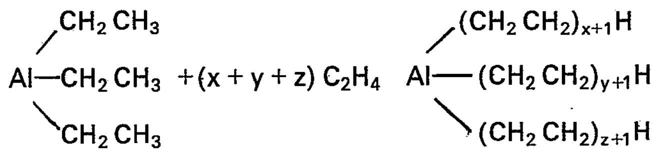

on oxyde ensuite le produit obtenu en alcoolate d'aluminium.

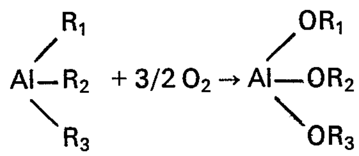

les alcools étant obtenus par hydrolyse.

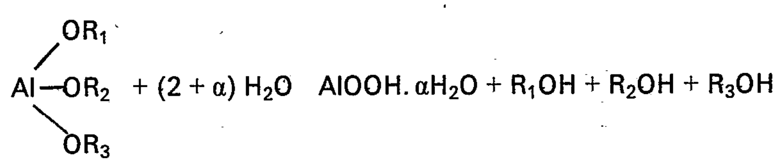

la pâte d'hydroxyde d'aluminium obtenue peut être éventuellement après séchage et calcination utilisée selon le procédé de l'invention.

L'alumine hydratée obtenue comme sous-produit dans la réaction de Ziegler est notamment décrite dans un bulletin de la Société CONOCO du 19 janvier 1971. Les produits décrits dans ce bulletin sont commercialisés sous la marque CATAPAL®. Par ailleurs, la Société CONDEA CHEMIE commercialise également de tels produits sous les noms de marques PURAL® et DISPURAL®. Lorsque ces alumines hydratées se présentent en poudre sous forme d'un gel, elles sont peptisées par l'eau ou une solution acidulée.

Les solutions de sels basiques d'aluminium que l'on peut mettre en œuvre selon l'invention sont ceux de formule générale $Al_2(OH)_xAy$ dans laquelle $0 < x < 6$ et $n\,y < 6$, n représentant le nombre de charges de l'anion A, l'anion A étant choisi parmi: les nitrates, chlorures, sulfates, perchlorates, chloroacétates, dichloracétates, trichloracétates, bromacétates, dibromacétates et les anions de formule générale

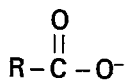

dans laquelle R représente un radical pris dans le groupe comportant H, $CH_3$, $C_2H_5$, $CH_3$, $CH_2$ $CH_2$, $(CH_3)_2$ CH.

On préfère généralement utiliser les hydroxychlorures d'aluminium. Ces sels basiques d'aluminium peuvent être obtenus notamment, par digestion d'aluminium métallique dans l'acide HA ou dans une solution de Al $A_3$, par électrolyse d'une solution de sel d'aluminium, par neutralisation d'un sel d'aluminium plus ou moins basique par une base et élimination du sel formé, par réaction d'un sel d'aluminium avec un donneur d'électron comme l'oxyde d'éthylène et élimination du produit de réaction, par mise en contact d'un sel d'aluminium avec un solvant non miscible à l'eau contenant une amine aliphatique à longue chaîne puis récupération de la phase aqueuse contenant le sel basique et concentration, par peptisation d'un gel d'alumine fraîchement précipité, par attaque d'un oxyde ou hydroxyde d'aluminium par l'acide HA.

La concentration exprimée en $Al_2O_3$ de la suspension, de la dispersion ou de la solution est généralement comprise entre 5 et 30%, elle doit généralement être telle que sa viscosité soit comprise entre 100 et 800 : mP/S.

Selon une variante du procédé de l'invention, les suspensions ou dispersions d'alumine ou solutions de sels basiques d'aluminium mises en œuvre peuvent contenir une charge d'alumine.

La proportion de charge dans la solution, dispersion ou suspension peut aller jusqu'à 90% en poids exprimé en $Al_2O_3$ par rapport à l'alumine totale.

La dimension des particules d'alumine constituant la charge peut varier dans de larges limites. Elle est généralement comprise entre 1 et 50 micromètres.

La charge d'alumine mise en œuvre peut être tout composé d'alumine. On peut en particulier, utiliser des composés hydratés d'alumine tels que: l'hydrargillite, la bayerite, la boehmite, la pseudoboehmite et les gels d'alumine amorphe ou essentiellement amorphe. On peut également mettre en œuvre les formes déshydratées ou partiellement déshydratées de ces composés qui sont constitués d'alumines de transition et qui comportent au moins une des phases prises dans le groupe constitué par rhô, chi, êta, gamma, kappa, thêta, delta, alpha.

En particulier, on pourra notamment utiliser des charges d'alumine obtenues selon l'un des procédés suivants, après éventuellement broyage et tamisage des particules:

– on précipite une solution aqueuse d'un sel d'aluminium par une solution d'un aluminate alcalin, on atomise le précipité obtenu, puis on le remet en suspension dans une solution aqueuse ayant un pH compris entre 4,5 et 7, on atomise et on sèche la bouillie d'alumine obtenue puis on lave, sèche et calcine le produit. (Procédé décrit dans le brevet US-A- 3 520 654).

– Par précipitation d'un gel d'alumine à un pH compris entre 7,5 et 11, lavage, essorage, remise en suspension, déshydratation rapide du produit dans un courant de gaz chauds à une température d'entrée comprise entre environ 350 et 1000 °C puis calcination. (Procédé décrit dans le brevet FR-A- 2 221 405).

– Par précipitation d'un gel d'alumine à un pH compris entre 7 et 10,5 mûrissement du précipité à un pH compris entre 10 et 11, homogénéisation et atomisation à 250–550 °C de la bouillie obtenue puis calcination. (Procédé décrit dans le brevet GB-A- 888 772).

– Par précipitation d'un aluminate alcalin par un acide minéral à une température comprise entre 30 et 75 °C, mûrissement dans un second réacteur à 35–70 °C à un pH voisin de 7, recyclage de la bouillie obtenue dans le réacteur de mélange, filtration, lavage, séchage du produit par atomisation puis calcination. (Procédé décrit dans le brevet US-A- 3 630 670).

– Par déshydratation rapide d'hydroxydes ou d'oxyhydroxydes d'aluminium, et plus particulièrement, d'hydrargillite dans un courant de gaz chauds; cette déshydratation opérée dans n'importe quel appareillage approprié à l'aide d'un courant de gaz chauds, la température d'entrée des gaz dans l'appareillage variant généralement de 400 à 1200 °C environ, le temps de contact de l'hydroxyde ou de l'oxyhydroxyde avec les gaz chauds étant généralement compris entre une fraction de seconde et 4–5 secondes; un tel procédé de préparation de poudre d'alumine active a notamment été décrit dans le brevet français n° 1 108 011.

– Par traitement dans un milieu aqueux ayant un pH inférieur à 9 d'une poudre d'alumine active obtenue par déshydratation rapide d'hydrargillite dans un courant de gaz chauds, séchage par atomisation, puis calcination. (Procédé décrit dans la demande de brevet européen n° 15 196).

On peut également mettre en œuvre comme charge d'alumine selon le procédé de l'invention, toute particule d'alumine obtenue par broyage de corps d'alumine préalablement façonné.

Lorsque l'on désire fabriquer selon le procédé de l'invention des supports de catalyse, en alumine très pure, on utilise de préférence des charges d'alumine obtenues par séchage et calcination des suspensions ou dispersions aqueuses de boehmite ou de pseudo-boehmite ultra-pures qui ont été obtenues selon le procédé qui a été décrit ci-dessus, ou les gels d'hydroxyde d'aluminium qui ont été préparés à partir de l'hydrolyse d'alcoolates d'aluminium.

Selon une variante de l'invention, il est possible de remplacer une partie de la suspension ou de la dispersion d'alumine ou de la solution de sel basique d'aluminium de départ, par des sols d'autres éléments comme, par exemple, ceux, lorsqu'ils existent, des éléments des groupes $I_B$, $III_B$, $IV_B$, $V_B$, $VI_B$, $III_A$, $IV_A$, $V_A$, $VI_A$, VIII de la classification périodique; il est également possible de mélanger la suspension ou dispersion ou solution de départ avec divers sels et en particulier ceux constitués avec les métaux des groupes $I_B$, $II_B$, $III_B$, $IV_B$, $V_B$, $III_A$, $IV_A$, $V_A$, $VI_A$, $VII_A$, VIII et des éléments du groupe $VI_B$ de la classification périodique.

On peut également mélanger la suspension ou dispersion ou solution de départ avec tout composé catalytiquement actif ou non, parmi ceux-ci on peut notamment citer: les poudres des métaux des groupes $I_B$, $II_B$, $III_B$, $IV_B$, $V_B$, $VII_B$, $I_A$, $II_A$, $III_A$, $IV_A$, $V_A$, $VI_A$, $VII_A$, VIII et des éléments du groupe $VI_B$, ces poudres pouvant être les métaux ou les éléments eux-mêmes, leurs oxydes, leurs sels insolubles, les solutions solides et les oxydes mixtes de ceux-ci.

Selon le procédé de l'invention, la suspension, la dispersion aqueuse d'alumine ou la solution de sel basique d'aluminium contenant éventuellement une charge d'alumine, est sous forme d'une émulsion de type huile dans l'eau.

Ainsi qu'il est bien connu, une émulsion de type aqueux ou huile dans l'eau est en système hétérogène constitué par la dispersion de fines globules d'un liquide (qui sera ci-après dénommé «phase organique») dans l'eau de telle façon que l'eau forme une phase continue en présence d'un agent de surface ou émulsionnant, l'agent de surface ou émulsionnant permettant d'obtenir une bonne dispersion de la phase organique dans la phase continue (l'eau) par modification des propriétés de l'interface entre les deux liquides.

Selon le procédé de l'invention, la dispersion pour former l'émulsion est effectuée par agitation de la dispersion ou de la suspension aqueuse d'alumine ou de la solution de sel basique d'aluminium contenant éventuellement une charge en présence de l'agent de surface ou émulsionnant. l'émulsion ainsi réalisée doit présenter une viscosité comprise entre environ 100 et environ 800 mP/S et de préférence entre 300 et 400 mP/S. Les viscosités indiquées sont mesurées par la méthode dite de «Couette» qui est un viscosimètre à cylindres coaxiaux.

La proportion de la phase organique dans la phase aqueuse (la phase aqueuse étant représentée par l'eau libre présente dans l'émulsion) est comprise entre environ 0,5 et environ 40% et de préférence entre environ 1 et environ 10%; cette proportion bien que non critique selon le procédé de l'invention influence la solidité mécanique des billes d'alumines fabriquées par le procédé de l'invention.

La phase organique de l'émulsion doit être constituée par des produits non totalement miscibles dans l'eau, éliminables par combustion et liquides à la température ambiante. Celle-ci peut être choisie parmi les phases dispersées les plus fréquemment rencontrées industriellement et qui sont dans les catégories suivantes: les huiles, graisses et cires minérales; les corps gras: glycérides ou cérides et les solvants usuels. La description de ces produits est notamment donnée dans l'ouvrage «Les Dispersions Aqueuses» de Jean Poré édité par la Société des publications «Le Cuir». On mettra en œuvre de préférence les pétroles et le kérosène dont la densité est voisine de 0,78.

L'agent de surface ou émulsionnant est choisi de façon à assurer la stabilité de l'émulsion, il doit également être éliminable par combustion et liquide à température ambiante et puisque l'on désire réaliser une émulsion de type huile dans l'eau, on choisira un agent de surface à tendance hydrophile. Le choix de cet agent sera effectué selon les techniques bien connues de l'homme de l'art et qui sont notamment décrites dans l'ouvrage «Emulsions: Theory and Practice by Paul Becher 1957 Reinhold Publishing Corporation». Lorsque l'on met en œuvre une phase organique comme les pétroles ou le kérosène, le H.L.B. («Hydrophile-Lipophyle-Balance») de l'agent de surface choisi devra de préférence se rapprocher de celui de la phase organique à disperser c'est-à-dire être compris généralement entre 8 et 20 et plus particulièrement de 10 à 14.

Selon le procédé de l'invention, la mise en forme par coagulation en gouttes de la suspension ou de la dispersion aqueuse d'alumine sous forme d'une émulsion de type huile dans l'eau est réalisée selon les procédés bien connus de l'homme de l'art et qui ont été rappelés ci-dessus. Les billes obtenues sont ensuite récupérées puis séchées et calcinées.

Les caractéristiques des billes que l'on peut obtenir selon le procédé de l'invention sont très étendues. Ces billes peuvent, en particulier, présenter une structure de pores monomodale ou bimodale avec un volume poreux total qui peut varier de 0,30 $cm^3/g$ à 3 $cm^3/g$ et une surface spécifique pouvant aller jusqu'à 350 $m^2/g$ et une résistance à l'attrition supérieure à 95% et généralement supérieure à 98%.

Le volume poreux des billes de l'invention est caractérisé en ce qu'il comporte des macropores fermés, c'est-à-dire des pores ayant un diamètre compris entre environ 0,2 et 15 micromètres qui ne sont pas accessibles autrement que par l'intermédiaire de micropores de diamètre compris entre 50 et 200 $\times 10^{-1}$ nm ou de mésopores de diamètre compris entre 200 et 1000 $\times 10^{-1}$ nm.

La quantité de macropores fermés dans les billes varie en fonction de la proportion de la phase organique dans la phase aqueuse qui est mise en œuvre dans le procédé de fabrication des billes d'alumine de l'invention.

Le volume poreux constitué de macropores fermés des billes de l'invention est compris entre 0,01 et 0,5 $cm^3/g$.

La macroporosité fermée caractéristique des billes de l'invention peut être mise en évidence par microscopie électronique à balayage.

Les billes obtenues selon le procédé de l'invention présentent un volume poreux total augmenté. Cette caractéristique rend leur utilisation particulièrement intéressante dans les réactions catalytiques car leur inertie thermique est diminuée, ce

qui permet d'atteindre plus rapidement la température de la réaction catalytique.

Les billes d'alumine de l'invention présentent une résistance à l'attrition remarquable ce qui rend leur utilisation dans les procédés fonctionnant en lit mobile ou bouillonnant également particulièrement intéressante.

Les billes selon l'invention peuvent être employées en adsorption ou en catalyse comme catalyseur ou support de catalyseur pour effectuer diverses réactions telles que, par exemple: la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation.

Lorsque les billes selon l'invention sont fabriquées à partir de suspensions ou dispersions d'alumine ultra-pure en présence éventuellement d'une charge d'alumine ultra-pure, ces billes sont particulièrement efficaces comme support de catalyseur pour les réactions d'hydrodésulfuration, reformage, hydrocraquage, isomérisation et reformage à la vapeur.

Les exemples suivants, donnés à titre non limitatif, illustrent l'invention sans en limiter la portée.

Dans les exemples, la densité de remplissage tassé (DRT) est mesurée de la façon suivante: on introduit un poids donné d'agglomérés dans une éprouvette graduée pour contenir les agglomérés dans un volume donné. On fait ensuite vibrer l'éprouvette jusqu'à la fin de tout tassement et jusqu'à l'obtention d'un volume constant. On calcule ensuite le poids d'aggloméré qui occupe un volume unité.

Le volume poreux total (VPT) est mesuré de la façon suivante: on détermine la valeur de la densité de grain et de la densité absolue: les densités de grain (Dg) et absolue (Da) sont mesurées par la méthode de picnométrie respectivement au mercure et à l'hélium; le VPT est donné par la formule:

$$VPT = \frac{1}{Dg} - \frac{1}{Da}$$

La surface spécifique (SBE) est mesurée par la méthode B.E.T.

La solidité mécanique (EGG) est mesurée par la méthode d'écrasement grain à grain. Elle consiste à mesurer la forme de compression maximale que peut supporter un granulé avant sa rupture, lorsque le produit est placé entre deux plans se déplaçant à la vitesse constante de 5 cm/mn. Dans le cas particulier de sphères, la force est exprimée en kilogrammes.

La solidité mécanique (EGG) est reliée au volume poreux total (VPT) par la loi de Schiller:

$$EGG = A \text{ Log } \frac{B}{D_g x VPT}$$

dans laquelle A et B sont des constantes. Ainsi lorsque la porosité du produit (VPT) augmente, l'EGG diminue, il est donc difficile de fabriquer des produits à la fois poreux et solides.

La résistance à l'attrition (AIF) est mesurée par le pourcentage de produit non usé par frottement selon la méthode suivante: on introduit un volume donné (60 $cm^3$) d'aggloméré dans un erlenmeyer renversé de construction particulière qui est raccordé à un orifice d'entrée métallique. Sur le fond de l'erlenmeyer on place un grand orifice de sortie (2,54 cm) recouvert d'un tamis de 1,168 mm d'ouverture; on envoie par l'orifice d'ouverture un fort courant d'azote sec qui a deux fonctions, d'une part de faire circuler les agglomérés les uns contre les autres, ce qui entraîne leur usure par frottement, d'autre part de provoquer le choc des agglomérés contre l'erlenmeyer, ce qui entraîne leur dégradation selon l'intensité du choc. Le produit est testé pendant 5 minutes et on pèse le poids des agglomérés restants. La diminution de poids après l'essai exprimé en pourcentage de la charge initiale représente la résistance à l'attrition AIF.

La macroporosité fermée caractéristique des billes du procédé de l'invention ne peut être mise en évidence lorsque la distribution des pores est mesurée par la technique de pénétration au mercure. En effet, la taille des pores mesurée par cette technique de pénétration au mercure comptabilise uniquement les micropores ou les mésopores. Ainsi la mesure du volume poreux correspondant aux macropores fermés est effectuée par la méthode suivante: on opère la différence entre la valeur du volume poreux total tel que mesuré par la méthode ci-dessus et la valeur du volume poreux mesuré à 25 °C par adsorption de tétrachlorure de carbone.

Exemple 1

Dans un bac de 250 litres, contenant 130 litres d'eau déminéralisée, sont introduits successivement, en agitant fortement:

– 2,700 l d'acide nitrique à 63%,

– 33,3 kg de gel d'hydroxyde d'aluminium de type boehmite obtenu comme sous-produit dans la fabrication de l'alcool par synthèse Ziegler et commercialisé par la Société Condéa sous la marque PURAL® SB à 75% $Al_2O_3$,

– 9 kg d'une charge d'alumine constituée du gel précédent qui a été calciné à 650 °C et broyé de telle manière que le diamètre moyen des particules soit compris entre 4 et 5 microns,

– 7 kg d'un hydrocarbure paraffinique en C10–C13 commercialisé par la Société B.P. sous l'appellation «SOLPAR® 195–230» mélangé à

450 $cm^3$ de Galoryl EM 10®, un agent émulsionnant non ionique de H.L.B. 14.

La viscosité de la suspension après 4 heures d'agitation faible est de 350 mP/S.

La suspension contient 18,5% d'$Al_2O_3$, le rapport charge d'alumine calcinée sur alumine totale est de 26,5%.

La proportion de la phase organique dans la phase aqueuse que l'on appellera par la suite: «rapport hydrocarbure/eau libre» est de 5%.

Le rapport agent émulsionnant/hydrocarbure est de 6,4%.

La suspension, par l'usage du tube calibré de diamètre intérieur 1,3 mm et de diamètre extérieur 1,8 mm, tombe en gouttes dans une colonne contenant une phase supérieure constituée par du pétrole sur une épaisseur de 6 cm, et d'une phase aqueuse inférieure constituée par une solution ammoniacale contenant 20 g/litre de $NH_3$.

Les billes d'hydrogel recueillies sont séchées et calcinées à 550 °C.

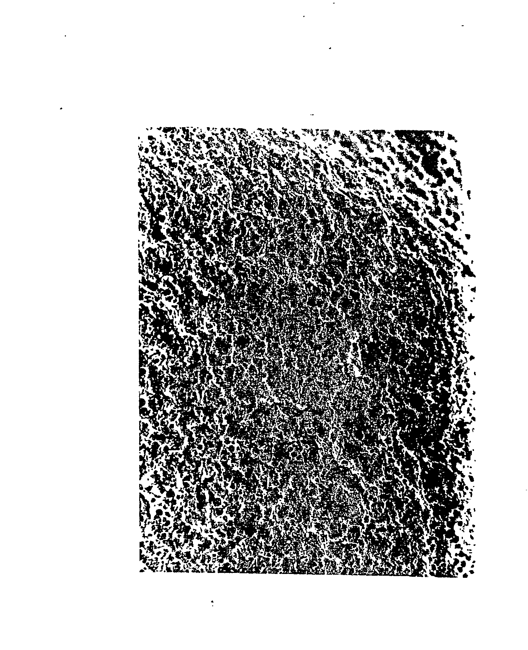

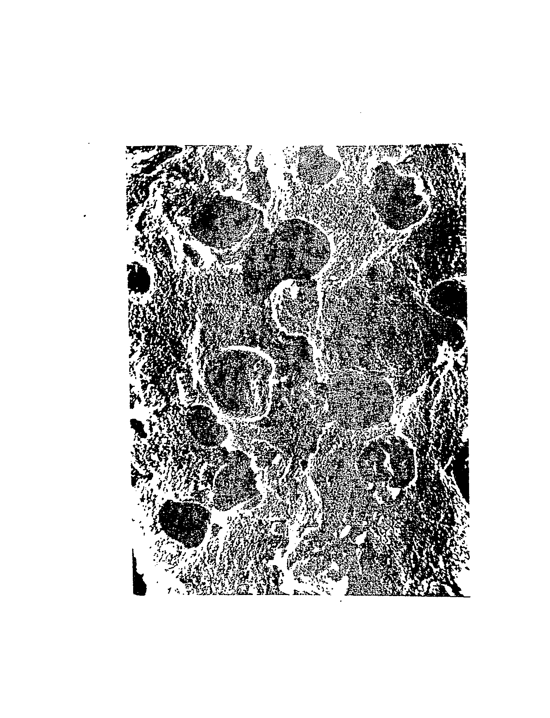

Les caractéristiques des billes sont rassemblées dans le tableau joint et les photographies données aux figures 1 et 2 représentent l'intérieur d'une bille au grossissement respectif × 300 et × 3000 obtenu au microscope électronique à balayage.

La photographie 1 met bien en évidence l'existence des macropores fermés dont la taille est comprise entre environ 1 et 10 micromètres et la photographie 2 met bien en évidence l'existence de macropores fermés dont la taille est comprise entre environ 0,2 et 10 micromètres.

Ces photographie mettent également en évidence la non communication des macropores fermés entre eux, les seules communications existant entre ces macropores fermés se faisant par l'intermédiaire des micropores et des mésopores qui existent dans la matière qui apparaît comme dense sur les photographies.

Exemple 2

La préparation de la suspension ainsi que la gélification des gouttes sont réalisées comme dans l'exemple 1.

Dans la suspension, on n'introduit que 3,5 kg d'hydrocarbure et 225 $cm^3$ de Galoryl EM 10®.

Le rapport hydrocarbure/eau libre n'est plus que de 2,5%.

Les caractéristiques des billes séchées et calcinées à 50 °C sont rassemblées dans le tableau joint.

Exemple 3

La préparation de la suspension ainsi que la gélification des gouttes sont réalisées comme l'exemple 1 mais en mettant en œuvre seulement 2,31 d'acide nitrique.

Il n'y a pas d'introduction d'une charge d'alumine.

Dans ces conditions, la suspension contient 15% d'$Al_2O_3$.

Le rapport hydrocarbure/eau libre est de 5% et le rapport émulgateur/hydrocarbure est de 6,4%.

Les caractéristiques des billes séchées et calcinées sont rassemblées dans le tableau joint.

Exemple 4

La préparation de la suspension ainsi que la gélification des gouttes sont réalisées comme dans l'exemple 1, mais l'hydrocarbure paraffinique en C10–C13 SOLPAR® est remplacé par 3,5 kg de cycloheptane de densité 0,810 et dont le point d'ébullition est à 118 °C; l'agent émulsionnant employé est le Cémulsol NP 10®, un alkyl phénol éthoxylé de H.L.B. 13,3–300 $cm^3$ sont introduits.

Les caractéristiques des billes séchées et calcinées à 550 °C sont rassemblées dans le tableau joint.

Exemple 5

La préparation de la suspension ainsi que la gélification des gouttes sont réalisées comme dans l'exemple 1 mais en mettant en œuvre:

– 2 litres d'acide nitrique à 63%,

– 40 Kg de gel d'hydroxyde d'aluminium Pural®SB,

– 21,2 Kg de charge d'alumine,

– 10 Kg d'hydrocarbure «Solpar® 195–230» mélangé à 500 $cm^3$ de Galoryl EM 10®.

Dans ces conditions, la suspension contient 25% d'$Al_2O_3$, le rapport charge d'alumine calcinée sur alumine totale est de 40%, le rapport hydrocarbure/eau libre est de 8% et le rapport agent émulsionnant/hydrocarbure est de 5%.

Les caractéristiques des billes séchées et calcinées sont rassemblées dans le tableau joint.

Exemple 6

On mélange 2500 g de sol de boehmite ultrafine contenant 11,5% d'$Al_2O_3$ avec 700 g de particules sphéroïdales d'alumine calcinée à 650 °C dont le diamètre moyen est de 6 microns.

Le sol de boehmite ultra-fine et les particules d'alumine sphéroïdales ont été préparés comme indiqué dans l'exemple 1 du brevet européen n° 15 801.

On ajoute 500 g d'eau puis 200 g d'hydrocarbure paraffinique en C10–C13 SOLPAR® contenant 25 g de Galoryl EM 10®.

Le rapport hydrocarbure/eau libre est de 7,4%.

On forme les billes comme indiqué dans l'exemple 1.

Les caractéristiques des billes séchées et calcinées à 900 °C sont rassemblées dans le tableau joint.

Exemple 7

Une solution filtrée d'aluminate de sodium présentant une concentration équivalente en $Al_2O_3$ 81 g/l et $Na_2O$ 61,3 g/l est introduite dans un réacteur en verre avec agitateur mécanique thermomètre et électrode de mesure du pH. Sous forte agitation, on fait passer un courant de $CO_2$ gazeux à pression atmosphérique, tel qu'un léger excèdent s'échappe du réacteur. On laisse évoluer la température jusqu'à 40° puis on la fixe à cette valeur par circulation externe d'eau froide. On coupe

le courant de $CO_2$ lorsque, après 11 mn, le pH s'est abaissé à 9,5, et on agite encore 5 mn. Le précipité est séparé par filtration et lavé sur filtre à l'eau permutée à 30° jusqu'à obtention d'un filtrat de résistivité $3.10^5$ohms.cm. Sur un prélèvement du gâteau de filtration séché à l'air à 30°, on ne décèle en diffraction X aucune organisation cristalline. Le résidu de calcination à 1000° ($Al_2O_3$) est de 51,3%.

Le précipité d'hydroxycarbonate lavé obtenu est mélange à 20° avec une solution aqueuse d'ammoniaque en quantités suffisantes pour obtenir dans le mélange, d'une part une concentration résultante en composé d'aluminium exprimée en $Al_2O_3$ de 50 g/l et, d'autre part, un rapport molaire entre la concentration en ion $NH_4^+$ (calculée en supposant complète l'ionisation de l'ammoniaque ou du produit résultant de sa réaction avec l'hydroxycarbonate) et la concentration en composé d'aluminium exprimée en $Al_2O_3$ de 0,20. Pour réaliser ce mélange, la solution ammoniacale est versée progressivement dans la suspension aqueuse d'hydroxycarbonate, sous forte agitation, le pH du milieu aqueux ainsi obtenu est de 10,2.

Dans une deuxième étape, le milieu de traitement provenant de la première étape est chauffé à une température de 85° pendant un temps de 4h sous la pression atmosphérique.

Dans une troisième étape, le milieu de traitement provenant de la deuxième étape est chauffé à une température de 150 °C pendant 6h. On obtient une suspension de boehmite qu'on filtre, qu'on lave à l'eau et qu'on sèche à 100 °C.

On introduit dans un bac contenant 9,3 litres d'eau déminéralisée, successivement et en agitant fortement:

– 150 $cm^3$ d'acide nitrique à 63%,

– 2160 g de la boehmite obtenue à partir des opérations décrites ci-dessus,

– 1440 g de charge d'alumine obtenue par calcination à 600 °C de la boehmite décrite précédemment,

– 720 g d'hydrocarbure «Solpar® 195–230» mélangé à 36 $cm^3$ de Galoryl EM 10®.

Dans ces conditions, on obtient une suspension contenant 25% d'$Al_2O_3$ avec un rapport charge d'alumine sur alumine totale de 40%, un rapport hydrocarbure/eau libre de 8% et un rapport agent émulsionnant/hydrocarbure de 5%.

La gélification des gouttes est réalisée comme dans l'exemple 1.

Les caractéristiques des billes séchées et calcinées sont rassemblées dans le tableau joint.

Exemple 8

A 10 kg d'hydroxychlorure d'alumine à 20% d'$Al_2O_3$ et 7% de Cl on ajoute:

– 500 g d'hydrocarbure en C13–C16, dont le point d'ébullition est compris entre 250 et 294 °C, contenant 25 g de Galoryl EM 10®.

– 700 g d'hexaméthylène tétramine dissout dans 1400 g d'eau.

Le rapport hydrocarbure/eau libre est de 5,7%.

On forme des gouttes qui tombent dans une huile à 90 °C.

On chauffe et on maintient pendant 3h les billes d'hydrogel à 130 °C, dans un appareil clos.

La pression est limitée à 3,5 bars.

L'huile est remplacée par une solution ammoniacale à 200 g/l de $NH_3$.

On chauffe la solution ammoniacale contenant les billes 4h à 90 °C.

Les caractéristiques des billes séchées et calcinées à 600 °C sont rassemblées dans le tableau joint.

Exemple 9 comparatif

La préparation de la suspension ainsi que la gélification des gouttes sont réalisées comme dans l'exemple 1.

Il n'y a pas d'introduction d'hydrocarbure ni d'agent émulsionnant.

Le rapport hydrocarbure/eau libre est égal à 0.

La viscosité de la suspension après 4h de faible agitation est de 250 mP/S.

Les caractéristiques des billes séchées et calcinées à 550 °C sont rassemblées dans le tableau joint.

CARACTERISTIQUE DES BILLES

| Exemples | Surface BET $m^2/g$ | VPT $cm^3/g$ | Volume poreux constitué de macropores fermés | Type de répartition des pores | ∅ moyen des pores en $10^{-1}$ nm | Volumes poreux en $cm^3/g$ dont les pores sont supérieures à 0,1 µ | Volume poreux en $cm^3/g$ dont les pores sont supérieures à 1 micron | DRT | EGG Kg | AIF % |
|---|---|---|---|---|---|---|---|---|---|---|
| 1 | 210 | 0,63 | 0,18 | monomodale | 90 | 0 | 0 | 0,650 | 5,2 | 99,9 |
| 2 | 200 | 0,50 | 0,05 | monomodale | 90 | 0 | 0 | 0,760 | 6 | 99,9 |
| 3 | 200 | 0,56 | 0,11 | monomodale | 90 | 0 | 0 | 0,670 | 5 | 99,9 |
| 4 | 200 | 0,49 | 0,03 | monomodale | 90 | 0 | 0 | 0,750 | 6 | 99,9 |
| 5 | 200 | 0,66 | 0,20 | monomodale | 90 | 0 | 0 | 0,620 | 4,8 | 99,9 |
| 6 | 110 | 1,21 | 0,15 | bimodale | | 0,65 | 0,52 | 0,380 | 2,2 | 99,5 |
| 7 | 220 | 0,62 | 0,15 | monodale | 80 | 0 | 0 | 0,645 | 5 | 99,9 |
| 8 | 140 | 1,69 | 0,12 | bimodale | | 0,60 | 0,01 | 0,289 | 2,2 | 99,8 |
| 9 comparatif | 210 | 0,40 | 0,01 | monomodale | 90 | 0 | 0 | 0,850 | 8 | 99,7 |

Le tableau ci-dessus montre notamment l'intérêt du procédé selon l'invention qui permet d'augmenter, de façon surprenante, le volume poreux des billes fabriquées par celui-ci.

**Revendications**

1. Procédé de fabrication de billes d'alumine du type comportant la mise en forme par coagulation en gouttes d'une suspension ou d'une dispersion aqueuse d'alumine, ou d'une solution d'un sel basique d'aluminium, récupération des billes formées, séchage et calcination, caractérisé en ce que la suspension, la dispersion aqueuse d'alumine ou la solution de sel basique d'aluminium est sous forme d'une émulsion de type huile dans l'eau et en ce que les suspensions ou dispersions d'alumine ou solutions de sels basiques d'aluminium contiennent en outre une charge d'alumine, la proportion de charge pouvant aller jusqu'à 90% en poids exprimé en $Al_2O_3$ par rapport à l'alumine totale.

2. Procédé selon la revendication 1 caractérisé en ce que la charge d'alumine est choisie parmi: l'hydrargillite, la bayerite, la boehmite, la pseudoboehmite et les gels d'alumine amorphe ou essentiellement amorphe, les formes déshydratées ou partiellement déshydratées de ces composés qui sont constitués d'alumines de transition et qui comportent au moins une des phases prises dans le groupe constitué par rhô, chi, êta, gamma, kappa, thêta, delta, alpha.

3. Procédé selon la revendication 1 caractérisé en ce que la concentration totale exprimée en $Al_2O_3$ de la suspension, de la dispersion ou de la solution est comprise entre 5 et 30%.

4. Procédé selon l'une quelconque des revendications précédentes caractérisé en ce que la viscosité de l'émulsion est comprise entre 100 et 800 mP/S et de préférence entre 300 et 400 mP/S.

5. Procédé selon l'une quelconque des revendications précédentes caractérisé en ce que l'émulsion de type huile dans l'eau est constituée d'une phase organique, d'une phase aqueuse et d'un agent de surface ou émulsionnant, la proportion de la phase organique dans la phase aqueuse est comprise entre 1 et 40% et de préférence entre 10 et 25%.

6. Procédé selon la revendication 5 caractérisé en ce que la phase organique et l'agent de surface ou émulsionnant sont éliminables par combustion et liquides à température ambiante.

7. Procédé selon la revendication 1 caractérisé en ce que la suspension ou la dispersion d'alumine ou la solution de sel basique d'aluminium contient des sols d'éléments des groupes $I_B$, $III_B$, $IV_B$, $VI_B$, $III_A$, $IV_A$, $V_A$, $VI_A$, VIII.

8. Procédé selon la revendication 1 caractérisé en ce que la suspension ou la dispersion d'alumine ou la solution de sel basique d'aluminium contient des poudres des métaux des groupes $I_B$, $II_B$, $III_B$, $IV_B$, $V_B$, $VI_B$, $VII_B$, $I_A$, $II_A$, $III_A$, $IV_A$, $V_A$, $VI_A$, $VII_A$, VIII ces poudres étant constituées par les métaux ou les éléments eux-mêmes, leurs oxydes, leurs sels insolubles, les solutions solides et les oxydes mixtes de ceux-ci.

9. Billes d'alumines obtenues selon le procédé de l'une quelconque des revendications précédentes caractérisées en ce qu'elles comportent des macropores fermés dont le diamètre est compris entre 0,2 et 15 micromètres.

10. Billes d'alumines selon la revendication 9 caractérisées en ce que le volume poreux correspondant aux macropores fermés est compris entre 0,01 et 0,5 $cm^3/g$.

**Patentansprüche**

1. Verfahren zur Herstellung von Aluminiumoxidkugeln des Typs, das die Formbildung durch Tropfen-Koagulation einer wässrigen Suspension oder Dispersion von Aluminiumoxid oder einer Lösung eines basischen Aluminiumsalzes, Gewinnung der gebildeten Kugeln, Trocknung und Calcinierung umfasst, dadurch gekennzeichnet, dass die wässrige Aluminiumoxid-Suspension, -dispersion oder die Lösung des basischen Aluminiumsalzes in Form einer Emulsion des Typs Öl-in-Wasser vorliegt und dass die Aluminiumoxid-Suspensionen, -dispersionen oder Lösungen von basischen Aluminiumsalzen ausserdem einen Zusatzstoff aus Aluminiumoxid enthalten, wobei die Menge des Zusatzstoffes bis zu 90 Gew.-% $Al_2O_3$, bezogen auf das Gesamtaluminiumoxid betragen kann.

2. Verfahren nach Anspruch 1, dadurch gekennzeichnet, dass der Aluminiumoxid-Zusatzstoff ausgewählt wird unter: Hydrargillit, Bayerit, Boehmit, Pseudoboehmit und den Gelen von amorphem oder im wesentlichen amorphem Aluminiumoxid, den dehydratisierten oder teilweise dehydratisierten Formen dieser Verbindung, die aus Übergangsaluminiumoxiden bestehen und die mindestens eine der Phasen der Gruppe rho, chi, eta, gamma, kappa, theta, delta oder alpha enthalten.

3. Verfahren nach Anspruch 1, dadurch gekennzeichnet, dass die Gesamtkonzentration an $Al_2O_3$ der Suspension, der Dispersion oder der Lösung zwischen 5 und 30 Gew.-% liegt.

4. Verfahren nach einem der Ansprüche 1 bis 3, dadurch gekennzeichnet, dass die Viskosität der Emulsion zwischen 100 und 800 mP/S, vorzugsweise zwischen 300 und 400 mP/S liegt.

5. Verfahren nach einem der Ansprüche 1 bis 4, dadurch gekennzeichnet, dass die Emulsion des Typs Öl-in-Wasser aus einer organischen Phase, einer wässrigen Phase und einem oberflächenaktiven oder emulsionsbildenden Mittel besteht, wobei der Anteil der organischen Phase in der wässrigen Phase zwischen 1 und 40 Gew.-%, vorzugsweise zwischen 10 und 25 Gew.-%, liegt.

6. Verfahren nach Anspruch 5, dadurch gekennzeichnet, dass die organische Phase und das oberflächenaktive oder emulsionsbildende Mittel durch Verbrennung entfernbar und bei Umgebungstemperatur flüssig sind.

7. Verfahren nach Anspruch 1, dadurch gekennzeichnet, dass die Aluminiumoxidsuspension oder -dispersion oder die Lösung des basischen Aluminiumsalzes Sole von Elementen der

Gruppen $I_B$, $III_B$, $IV_B$, $VI_B$, $III_A$, $IV_A$, $V_A$, $VI_A$, VIII enthält.

8. Verfahren nach Anspruch 1, dadurch gekennzeichnet, dass die Aluminiumoxidsuspension oder -dispersion oder die Lösung des basischen Aluminiumsalzes Pulver von Metallen der Gruppen $I_B$, $II_B$, $III_B$, $IV_B$, $V_B$, $VI_B$, $VII_B$, $I_A$, $II_A$, $III_A$, $IV_A$, $V_A$, $VI_A$, $VII_A$, VIII enthält, wobei diese Pulver aus den Metallen oder den Elementen selbst, ihren Oxiden, ihren unlöslichen Salzen, ihren festen Lösungen und den gemischten Oxiden besteht.

9. Aluminiumoxidkugeln, erhältlich nach dem Verfahren nach einem der vorangehenden Ansprüche, dadurch gekennzeichnet, dass sie geschlossene Makroporen enthalten, deren Durchmesser zwischen 0,2 und 15 µm beträgt.

10. Aluminiumoxidkugeln nach Anspruch 9, dadurch gekennzeichnet, dass das Porenvolumen, das den geschlossenen Makroporen entspricht, zwischen 0,01 und 0,5 $cm^3/g$ beträgt.

## Claims

1. Process for the manufacture of alumina beads, of the type which includes shaping, by dropwise coagulation of an aqueous suspension or dispersion of alumina, or of a solution of a basic salt of aluminium, recovery of the beads formed, drying and calcining, characterized in that the aqueous suspension or dispersion of alumina or the solution of a basic salt of aluminium is in the form of an emulsion of the oil-in-water type and in that the alumina suspensions or dispersions or solutions of basic salts of aluminium additionally contain an alumina extender, the proportion of extender being up to 90% by weight, expressed as $Al_2O_3$ based on total alumina.

2. Process according to Claim 1, characterized in that the alumina extender is chosen from: hydrargillite, bayerite, boehmite, pseudoboehmite and amorphous or essentially amorphous alumina gels, and dehydrated or partially dehydrated forms of these compounds, which consist of transition aluminas and which comprise at least one of the phases taken from the group consisting of rho, chi, eta, gamma, kappa, theta, delta and alpha.

3. Process according to Claim 1, characterized in that the total concentration of the suspension, the dispersion or the solution, expressed as $Al_2O_3$, is between 5 and 30%.

4. Process according to any one of the preceding claims, characterized in that the viscosity of the emulsion is between 100 and 800 mP/s and, preferably, between 300 and 400 mP/s.

5. Process according to any one of the preceding claims, characterized in that the emulsion of the oil-in-water type consists of an organic phase, an aqueous phase and a surface agent or emulsifying agent, and the proportion of the organic phase in the aqueous phase is between 1 and 40% and, preferably, between 10 and 25%.

6. Process according to Claim 5, characterized in that the organic phase and the surface agent or emulsifying agent can be removed by combustion and are liquid at ambient temperature.

7. Process according to Claim 1, characterized in that the alumina suspension or dispersion or the solution of a basic salt of aluminium contains sols of elements of groups $I_B$, $III_B$, $IV_B$, $VI_B$, $III_A$, $IV_A$, $V_A$, $VI_A$ and VIII.

8. Process according to Claim 1, characterized in that the alumina suspension or dispersion or the solution of a basic salt of aluminium contains powders of metals of groups $I_B$, $II_B$, $III_B$, $IV_B$, $V_B$, $VI_B$, $VII_B$, $I_A$, $II_A$, $III_A$, $IV_A$, $V_A$, $VI_A$, $VII_A$ and VIII, these powders consisting of the metals or the elements themselves, their oxides, their insoluble salts, solid solutions, and mixed oxides thereof.

9. Alumina beads according to the process of any one of the preceding claims, which are characterized in that they contain closed macropores whose diameter is between 0.2 and 15 micrometres.

10. Alumina beads according to Claim 9, which are characterized in that the pore volume corresponding to the closed macropores is between 0.01 and 0.5 $cm^3/g$.